# DEMANDE DE BREVET EUROPEEN

(11) **EP 0 544 565 A1**
(43) Date de publication de la demande: **02.06.1993**
(21) Numéro de dépôt: 92403110.7
(22) Date de dépôt: 19.11.1992
(51) Int. Cl.: G02F 1/136, H01C 7/10

(54) **Procédé de fabrication d'écrans d'affichage à matrice active, notamment de grandes dimensions**

(30) Priorité: 26.11.1991 FR 9114549
(71) Demandeur: THOMSON-CSF, 75008 Paris (FR)
(72) Inventeur: Buchy, François, F-92402 Courbevoie Cédex (FR)
(74) Mandataire: Guérin, Michel

(57) **Abrégé**

L'invention concerne un procédé pour la fabrication d'écrans de visualisation matriciels de grandes dimensions du type à matrice active, dont les éléments de commutation servant à la commande de chaque point image sont constitués à partir d'une composition céramique présentant une caractéristique courant-tension non linéaire.

Le procédé consiste à réaliser sur un substrat (1) un réseau d'électrodes (E1 à E3) et un réseau de surfaces conductrices (A1 à A9) ou armatures délimitant chacune un point image, puis à relier les armatures aux électrodes par les éléments de commutation (EC1 à EC9). Conformément à l'invention, les éléments de commutations (EC1 à EC9) sont obtenus en réalisant une suspension de grains (31) de la composition céramique au-dessus du substrat (1) et en laissant ces grains se déposer sur le substrat par un effet de gravité.

L'invention s'applique de façon particulièrement intéressante à la fabrication d'écrans du type à cristaux liquides.

## Description

L'invention concerne un procédé pour la réalisation d'écrans d'affichage matriciels du type à matrice active.

Les écrans d'affichage de type matriciel comprennent un réseau de points élémentaires d'image ou pixels, formés chacun à l'intersection d'un premier conducteur ou électrode colonne croisé avec un second conducteur ou électrode ligne. L'adressage, c'est-à-dire la commande d'un pixel donné est accompli en sélectionnant et en commandant l'électrode colonne et l'électrode ligne correspondantes. Il est courant de réaliser une telle commande d'un pixel par l'intermédiaire d'un élément de commutation.

Le plus souvent l'élément de commutation est un transistor du type MISFET réalisé suivant la technique des films en couche mince (TFT) ou bien tout autre composant à deux électrodes et présentant une caractéristique courant-tension non linéaire, notamment diode, MIM, etc.... Il est connu également pour réaliser l'élément de commutation, d'utiliser des varistances qui sont des éléments dont la résistance ohmique diminue quand la tension qui leur est appliquée augmente. Une telle utilisation des varistances est décrite notamment dans un brevet français au nom de THOMSON-CSF publié avec le n° 2 542 914, dans lequel ces éléments de commutation du type varistance sont réalisés par des techniques de sérigraphie. Un autre mode de réalisation d'élément de commutation présentant l'effet "varistance" est décrit dans un article de D.E. CASTLE BERRY et L.M. LEVINSON, Conference Record of the 1980 Sociéty for Information Display 1980, pages 198-204. Les varistances décrites dans ce dernier document sont réalisées sous des formes massives de céramique frittée.

Les écrans matriciels à matrice active, tels que par exemple les écrans L.C.D. sont bien connus. Ils permettent de réaliser des écrans d'affichage utilisés dans de nombreux domaines, y compris pour l'affichage d'images de télévision. Cependant les applications de ces écrans restent limitées à l'affichage d'images de dimensions relativement petites par rapport aux écrans de télévision ou aux moniteurs à tubes actuels, et ne dépassant pas 20 cm X 30 cm du fait des difficultés rencontrés pour fabriquer ces écrans à matrice active dans des dimensions plus grandes. En fait la difficulté majeure réside particulièrement dans la réalisation des éléments de commutation, dans le cas de tels écrans de grandes dimensions.

Dans le cas d'un écran L.C.D. classique à matrice active, cet écran comprend généralement deux plaques transparentes en verre entre lesquelles est contenu le cristal liquide. Chaque plaque de verre forme un substrat portant un réseau matriciel de petites surfaces conductrices et transparentes, correspondant chacune à un pixel, c'est-à-dire à une cellule élémentaire à cristaux liquides ; en fait chacune de ces petites surfaces conductrice constitue l'armature d'une cellule élémentaire. Les deux plaques de verre sont disposées l'une par rapport à l'autre, de façon que les deux armatures opposées d'une même cellule soient en vis-à-vis. De plus, chaque plaque contient un réseau d'électrodes, électrodes lignes sur une plaque, électrodes colonnes sur l'autre.

Dans tous les cas les armatures de l'une des plaques sont reliées directement à l'électrode correspondante de l'un des réseaux d'électrodes, alors que les armatures de l'autre plaque sont reliées à l'électrode correspondante de l'autre réseau d'électrodes par l'intermédiaire de l'élément de commutation.

Dans le cas par exemple ou chaque plaque porte un réseau d'électrodes, les armatures et le réseau d'électrodes de chaque plaque peuvent être réalisés par le dépôt d'une même couche transparente d'un matériau conducteur, de l'ITO par exemple, couche qui est ensuite gravée.

La ou les couches d'ITO peuvent être déposées sur les plaques par différents procédés (par exemple, dépôt chimique, pulvérisation cathodique, etc ....) qui permettent de réaliser ces dépôts sur des surfaces relativement importantes, qui pourraient atteindre par exemple 1m x 2m.

Le dépôt des couches servant à réaliser l'élément de commutation est effectué ensuite.

Dans le cas d'éléments de commutation formés par des transistors ou des diodes, les couches à déposer sont généralement du silicium polycristallin, et elles exigent d'utiliser des techniques du type CVD mis en oeuvre dans des réacteurs utilisés en technologie des circuits intégrés ; à quoi s'ajoute la nécessité de définir l'élément de commutation par les techniques usuelles de photolithographie. La mise en oeuvre de ces techniques rencontre des difficultés qui augmentent avec la surface. Ces difficultés rendent même ces dépôts impossibles de façon industrielle au delà de dimension de par exemple 30 cm x 30 cm, pour la raison entre autres qu'il n'existe pas à ce jour dans l'industrie, d'équipements prévus pour de telles dimensions.

Dans le cas où les éléments de commutation sont du type "varistance", le matériau utilisé est un composé de type céramique, par exemple à base d'oxyde de zinc (ZnO). Mais les techniques classiques de mise en oeuvre de ces matériaux présentant l'effet "varistance" ne permettent pas de réaliser des écrans de grandes dimensions :
- en ce qui concerne les techniques de sérigraphie, elles présentent notamment l'inconvénient de reposer sur l'utilisation d'un écran tendu de toile et d'une raclette répartissant la pâte sérigraphique. Aux grandes dimensions, par exemple 50 cm de côté, il devient difficile de conserver les tolérances géométriques de cette toile sous la pression de la raclette.
- en ce qui concerne la réalisation de varistances sous forme massive de céramique frittée, il conviendrait pour des raisons de tenue mécanique, de réaliser des plaques céramiques d'au moins un centimètre d'épaisseur, sans oublier les caractéristiques des presses de mise en forme avant frittage, sachant qu'il est courant en technologie céramique, d'appliquer des pressions de l'ordre de la tonne par centimètre carré.

En vue de permettre une fabrication industrielle d'écrans d'affichage à matrice active de grandes dimensions, la présente invention porte sur un procédé permettant de réaliser les éléments de commutation à partir d'au moins une couche d'une composition céramique apte à présenter l'effet "variastance". Le procédé de l'invention permet de déposer cette composition céramique de façon homogène sans limitation de principe quand à la surface sur laquelle s'effectue ce dépôt.

En conséquence, l'invention peut s'appliquer à la réalisation d'écrans d'affichage, notamment du type à cristaux liquides ayant des dimensions largement plus grandes que celles qui sont obtenues à ce jour. Il est possible par exemple de réaliser des écrans d'affichage ayant 1 mètre de côté ou plus. Des écrans d'affichage ainsi obtenus peuvent avantageusement constituer par exemple des écrans plats muraux ou des écrans du type affichage public. L'invention s'applique aux écrans d'affichage du type à cristaux liquides, et d'une manière plus générale à tous types d'écran à matrice active dans lesquels l'élément de commutation met en oeuvre l'effet de varistance.

L'invention a donc pour objet un procédé de fabrication d'un écran d'affichage à matrice active comportant un réseau matriciel de cellules élémentaires disposées aux intersections de deux réseaux d'électrodes croisées, chaque cellule comportant une première et une seconde surfaces conductrices en vis-à-vis portée respectivement par un premier et un second substrats, au moins les premières surfaces conductrices étant reliées aux électrodes de l'un des réseaux d'électrodes par l'intermédiaire d'un élément de commutation réalisé dans une composition céramique, ledit procédé étant caractérisé en ce que, pour réaliser les éléments de commutation, il consiste à mettre la composition céramique sous la forme d'une poudre dont les grains sont en suspension dans un fluide au dessus du premier substrat, afin d'obtenir un dépôt de cette poudre par effet de gravité sur au moins certaines zones localisées reliant les surfaces conductrices aux électrodes.

L'invention sera mieux comprises à la lecture de la description qui suit, faite en référence aux dessins annexés parmi lesquels :
- la figure 1 est une vue en perspective montrant schématiquement, à titre d'exemple non limitatif, l'un des deux substrats d'un écran d'affichage à cristaux liquides du type à matrice active, substrat sur lequel des éléments de commutation sont obtenus à l'aide du procédé de l'invention ;
- la figure 2 illustre une étape de la mise en oeuvre du procédé de l'invention.

En prenant pour exemple afin de simplifier la description, un écran d'affichage L.C.D. à matrice active du type dans lequel chacune des deux plaques ou substrats (entre lesquelles est contenu le cristal liquide) porte un réseau d'électrodes, l'un des deux substrats comporte en plus, pour chaque cellule élémentaire à cristaux liquides, un élément de commutation reliant à une même électrode l'armature de toutes les cellules appartenant à une même ligne ou à une même colonne.

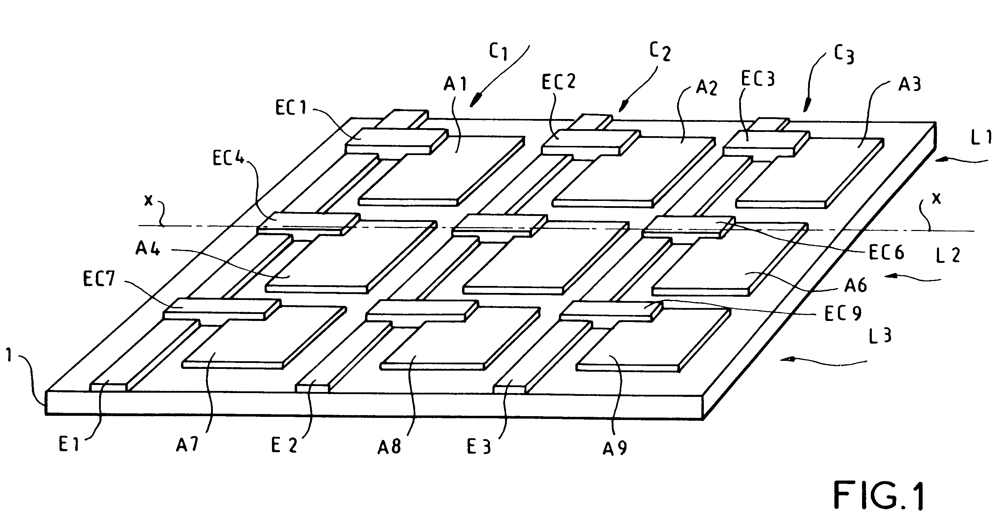

La figure 1 représente un tel substrat repéré 1, portant des éléments de commutation EC1 à EC9. Le substrat 1 porte en outre un réseau d'électrodes E1 à E3 ainsi qu'un réseau d'armatures A1 à A9 disposées en lignes L1 à L3 et en colonnes C1 à C3, et symbolisant chacune une cellule élémentaire à cristaux liquides.

Les électrodes E1 à E3 constituent dans l'exemple des électrodes colonnes qui, de façon classique, en fonctionnement sont croisées avec des électrodes lignes (non représentées) portées par le second substrat (non représenté). Comme il a déjà été expliqué dans le préambule de la description, le second substrat porte lui aussi de secondes armatures, disposées d'une même manière que les armatures A1 à A9 afin de définir avec ces dernières les cellules à cristaux liquides, ces secondes armatures étant reliées directement aux électrodes lignes.

Pour simplifier la description seulement trois lignes L1 à L3 et trois colonnes C1 à C3 sont représentées, ce qui limite à neuf le nombre des cellules élémentaires, mais bien entendu l'invention s'applique aussi dans le cas d'écrans comportant un nombre de cellules élémentaires beaucoup plus grand, d'autant qu'elle a pour but de permettre la réalisation d'écrans de grandes dimensions, éventuellement sans dégrader le contraste de l'image : ainsi par exemple, un écran de 1m x 2m réalisé conformément à l'invention pourrait comporter des cellules élémentaires (et donc un même nombre d'éléments de commutation) disposées suivant 1 000 lignes et 2 000 colonnes.

Les éléments de commutation EC1 à EC9 sont des éléments non linéaires du type varistance, c'est-à-dire dont la résistance varie avec la tension qui leur est appliquée ; plus précisément dans le cas présent, la résistance diminue fortement avec la tension appliquée au delà d'une certaine valeur de celle-ci dite tension de seuil. Ces éléments de commutation EC1 à EC9 relient électriquement les armatures d'une même colonne C1 à C3 à l'électrode E1 à E3 correspondante, par exemple : les armatures A1 à A7 sont reliées à la première électrode colonne E1.

Comme il a déjà été indiqué dans le préambule, les électrodes E1 à E3 et les armatures A1 à A9 peuvent facilement être réalisées suivant des procédés traditionnels à partir d'une même couche d'ITO par exemple, déposée sur le substrat 1, ce dernier étant en verre transparent par exemple. Cette couche est ensuite gravée pour constituer les bandes formant les électrodes E1 à E3 et les îlots formant les armatures A1 à A9. Les techniques classiques de dépôt et de gravure chimique, permettent de réaliser cette première étape sans problèmes particuliers, sur des substrats de grandes dimensions.

L'étape suivante consiste à réaliser les éléments de commutation A1 à A9.

Conformément à l'invention, pour réaliser les éléments de commutation A1 à A9, on place le substrat 1 (sur lequel de préférence mais non nécessairement, sont déjà réalisées les électrodes et les armatures) sous une poudre en suspension dans un fluide, la poudre étant faite dans la composition céramique apte à engendrer l'effet varistance

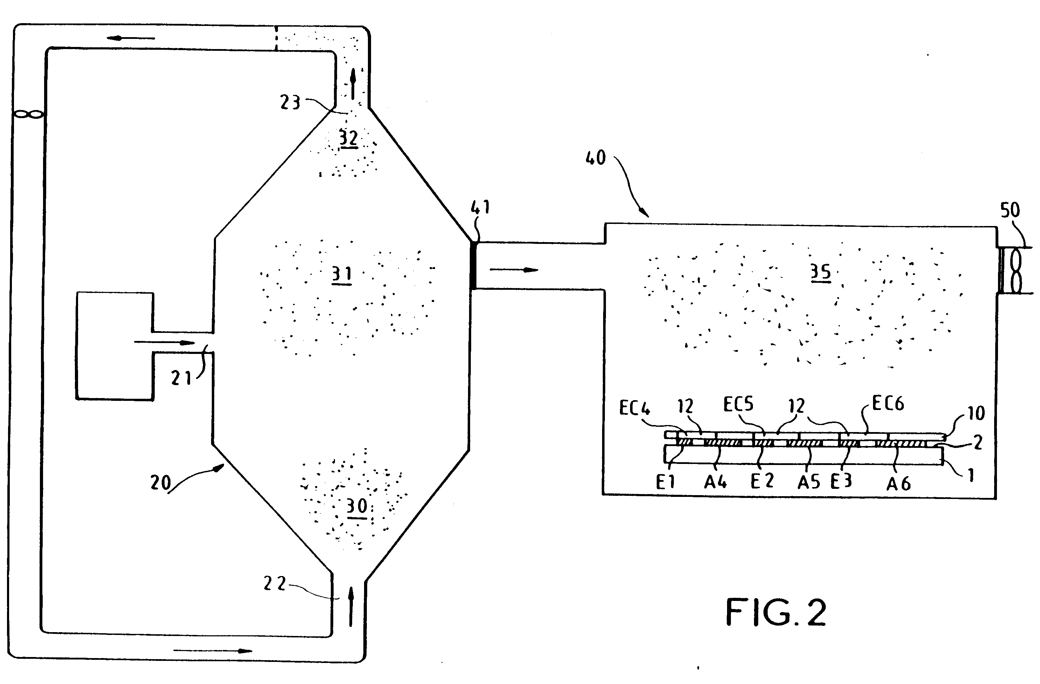

La figure 2 illustre schématiquement l'étape dans laquelle la composition céramique, sous forme de poudre, est déposée sur le substrat 1.

Dans l'exemple non limitatif représenté à la figure 2, un masque 10 est disposé au dessus du substrat 1, au dessus d'une face 2 de ce dernier sur laquelle sont réalisées les électrodes E1 à E3 et les armatures A1 à A9.

Le masque 10 comporte des ouvertures 12 au travers desquelles la poudre en suspension se dépose sur le substrat 1, et plus précisément sur les parties d'électrodes E1 à E3 et d'armatures A1 à A9 qui sont a relier.

La poudre de la composition céramique a une granulométrie contrôlée et elle est mise en suspension au dessus du substrat 1. A cet effet, les méthodes utilisées sont des méthodes usuelles de la métallurgie des poudres ou de la technologie céramique.

Par exemple, la granulométrie désirée de la poudre en suspension peut être obtenue en utilisant des technologies de broyage ou de synthèses chimiques connues et la mise en suspension utilisera une technique de lit fluidisé, en elle-même classique, comme illustré schématiquement à la figure 2. La poudre du matériau approprié, par exemple de l'oxyde de zinc et les additifs nécessaires à l'obtention de la caractéristique courant-tension non linéaire, est injectée par un orifice 21 dans une enceinte 20 dans laquelle circule un fluide, de l'air par exemple. Cet air pénètre dans l'enceinte 20 par une extrémité basse 22 de cette dernière, et en ressort par une extrémité haute 23.

Pour une vitesse donnée de l'air dans l'enceinte 20, des grains 30 (de cette poudre injectée dans l'enceinte 20) ayant des granulométries les plus fortes, tombent par effet de gravité, alors que des grains 31 de granulométrie inférieure à une certaine valeur donnée par la nature du matériau et les paramètres de l'équipement, se trouvent en suspension dans l'enceinte et peuvent en être extraits. On peut ainsi sélectionner des grains 31 dont la granulométrie moyenne est celle qui est désirée. Dans le cas de l'oxyde de zinc utilisé pour réaliser des éléments de commutation, cette granulométrie peut être comprise par exemple entre 0,1 micromètres et 10 micromètres.

Il est à noter que pour réaliser des éléments de commutation présentant l'effet dit "varistance", différents matériaux disponibles dans le commerce sous forme de poudre peuvent être utilisés : en plus des compositions à base d'oxyde de zinc déjà mentionnées, on peut citer par exemple des compositions à base d'oxydes de titane ou de carbure de silicium dopé. Toutes ces formulations comprendront chaque fois l'ensemble des additifs nécessaires au contrôle de l'effet non-linéaire.

Ayant réalisé dans l'enceinte 20 une suspension 31 formés des grains 31 ayant la granulométrie moyenne désirée, cette suspension est ensuite introduite dans une seconde enceinte 40 dans laquelle est déjà disposé le substrat 1, le masque 10 étant posé sur le substrat 1. Dans l'exemple non limitatif décrit, les deux enceintes 20, 40 communiquent par l'intermédiaire d'un volet 41, et la suspension 31 peut être transférée de la première enceinte 20 jusque dans la seconde enceinte 40 en quelques dizaines de secondes.

La suspension 31 faite d'une poudre de la composition céramique, est ainsi amenée au dessus du substrat 1, et l'enceinte 40 est alors isolée de la première enceinte 20 et de la canalisation 50 d'extraction ; la suspension 31 se dépose alors sur le substrat 1. Les épaisseurs de dépôt dépendent de la granulométrie de la suspension 31, et de la durée de ce qui correspond à une sédimentation, c'est-à-dire le temps pendant lequel on laisse les grains de cette suspension se déposer par l'effet de la gravité.

Il est simple dans ces conditions d'obtenir un dépôt en couche dite épaisse (de l'ordre de 10 à 50 microns), avec des grains ayant la granulométrie mentionnée plus haut pour une durée de sédimentation de l'ordre d'une dizaine de minutes. La couche ainsi déposée est dite "épaisse" par opposition aux couches dites "minces" qui sont obtenues par des techniques d'évaporation.

Pour mettre fin à la phase de dépôt et contrôler l'épaisseur du dépôt avec une précision meilleure, on peut par exemple activer le mécanisme d'évacuation par la canalisation 50.

On sort ensuite de l'enceinte 40 le substrat 1 portant le masque 10 avec le dépôt. Le masque 10 est ensuite ôté du substrat 1 et ce dernier est soumis à un traitement thermique réalisant le frittage des éléments de commutation.

Cette cuisson de la composition céramique déposée s'effectue à une température inférieure à la température de ramollissement du substrat, 600° C par exemple, pendant une durée de l'ordre d'une heure.

Ceci constitue une méthode de dépôt directe, c'est-à-dire que le masque 10 comporte des ouvertures 12 dont la forme et la position correspondent, pour chacune de ces ouvertures, à la forme et à la position que doit avoir un élément de commutation EC1 à EC9 montré à la figure 1.

Mais il est possible aussi, bien entendu, de placer le substrat 1 sous la suspension 31, sans utiliser à ce stade le masque 12, de manière que le dépôt s'effectue sur toute la surface du substrat 1 et constitue sur toute la surface de ce dernier une unique couche ininterrompue.

Dans ce cas, d'une manière en elle-même classique on dépose ensuite sur cette couche de composition céramique, une couche (non représentée) de résine photosensible. Cette couche photosensible est ensuite soumise à une étape d'insolation au travers d'un masque, en vue de définir les zones à conserver dans la couche de composition céramique. Puis par un procédé classique de gravure chimique, on ne laisse subsister que les zones destinées à former les éléments de commutation EC1 à EC9.

La technique de dépôt du type céramique ci-dessus décrite, appliquée à réaliser des éléments de commutation d'un écran à matrice active, offre l'avantage de permettre des dépôts homogènes de la composition céramique, sous limitations quant à la surface sur laquelle ces dépôts peuvent être réalisés.

De plus, en raison de la nature "couche épaisse" de l'élément de commutation, celui-ci sert également de cale d'épaisseur dans la réalisation de la cellule à cristal liquide.

## Revendications

1. Procédé de fabrication d'un écran d'affichage à matrice active du type comportant au moins un substrat (1) portant un réseau de surfaces conductrices (A1 à A9) délimitant les points image et au moins un réseau d'électrodes (E1 à E3), chaque surface conductrice étant reliée à une électrode par l'intermédiaire d'un élément de commutation (EC1 à EC9) réalisé dans une composition céramique présentant un effet dit "varistance", ledit procédé étant caractérisé en ce que pour réaliser les éléments de commutation, il consiste à mettre la composition céramique sous la forme d'une poudre en suspension (31) dans un fluide au dessus du substrat (1), afin d'obtenir un dépôt de cette poudre par effet de gravité sur au moins certaines zones du substrat reliant les surfaces conductrices (A1 à A9) aux électrodes (E1 à E3).

2. Procédé suivant l'une des revendications précédentes, caractérisé en ce qu'après le dépôt sur le substrat (1) de la poudre de la composition céramique, il consiste à soumettre le substrat (1) à un traitement thermique.

3. Procédé suivant l'une des revendications précédentes, caractérisé en ce que l'écran d'affichage est du type à cristaux liquides.

4. Procédé suivant l'une des revendications précédentes, caractérisé en ce que la composition céramique est à base d'oxyde de zinc (ZnO).

5. Procédé suivant l'une des revendications précédentes caractérisé en ce qu'il consiste à former la poudre en suspension (31) avec une gamme de granulométrie donnée.

6. Procédé suivant l'une des revendications précédentes, caractérisé en ce qu'il consiste à mettre la poudre en suspension (31) par la technique des lits fluidisés.

7. Procédé suivant l'une des revendications précédentes, caractérisé en ce qu'un masque (10) est interposé entre la poudre en suspension (31) et le substrat.

8. Procédé suivant l'une quelconque des revendications 1 à 6, caractérisé en ce qu'il consiste à opérer le dépôt d'une couche de la poudre en suspension sur l'ensemble de la surface du substrat, puis à déposer une couche photosensible, puis à obtenir les éléments de commutation (EC1 à EC9) par une étape d'insolation suivie d'une étape de gravure.
